(19) Europäisches Patentamt
European Patent Office
Office européen des brevets

(11) **EP 2 401 146 B1**

(12) **EUROPEAN PATENT SPECIFICATION**

(45) Date of publication and mention
of the grant of the patent:
**02.12.2020 Bulletin 2020/49**

(21) Application number: **10746538.7**

(22) Date of filing: **24.02.2010**

(51) Int Cl.:
**B32B 17/06** *(2006.01)*          **C03C 13/00** *(2006.01)*
**B01D 39/20** *(2006.01)*

(86) International application number:
**PCT/US2010/000537**

(87) International publication number:
**WO 2010/098841 (02.09.2010 Gazette 2010/35)**

(54) **FILTER MEDIA SUITABLE FOR ASHRAE APPLICATIONS**

FÜR ASHRAE-ANWENDUNGEN GEEIGNETE FILTERMEDIEN

MILIEUX FILTRANTS APPROPRIÉS POUR DES APPLICATIONS ASHRAE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.02.2009  US 392040**

(43) Date of publication of application:
**04.01.2012 Bulletin 2012/01**

(73) Proprietor: **HOLLINGSWORTH & VOSE COMPANY
East Walpole, MA 02032 (US)**

(72) Inventors:
• **SEALEY, David, F.
Worcestershire WR14 1SD (GB)**
• **LANE, Marianne
Nashua, NH 03062 (US)**

(74) Representative: **Hoffmann Eitle
Patent- und Rechtsanwälte PartmbB
Arabellastraße 30
81925 München (DE)**

(56) References cited:
**US-A- 5 609 937          US-A- 5 873 968
US-A- 6 114 262          US-A1- 2003 082 979
US-A1- 2004 224 594      US-A1- 2006 096 263**

**Description**

Field of Invention

The present invention relates generally to filter media which may be used in ASHRAE applications and, more particularly, to filter media including fiber webs which have desirable performance characteristics.

Background of Invention

Filter media can be used to remove contamination in a variety of applications. Depending on the application, the filter media may be designed to have different performance characteristics. For applications in heating, ventilating, refrigerating, and air conditioning applications, the media may be designed to have performance characteristics approved by the American Society of Heating, Refrigeration and Air Conditioning Engineers (ASHRAE). Such media are referred to as ASHRAE filter media. For applications (e.g., clean room or biomedical applications) that demand different performance characteristics (e.g., very high efficiency) than generally obtainable with ASHRAE filter media, other types of filters are used including high efficiency particulate air (HEPA) filters.

Filter media can be formed of a web of fibers. The fiber web provides a porous structure that permits fluid (e.g., gas, air) to flow through the filter media. Contaminant particles contained within the fluid may be trapped on the fibrous web. Filter media characteristics, such as pressure drop, surface area, and basis weight, affect filter performance including filter efficiency and resistance to fluid flow through the filter. In general, higher filter efficiencies result in a higher resistance to fluid flow which leads to higher pressure drops for a given flow rate across the filter.

US 2004/224594 A1 discloses a nonwoven filter media, comprising at least one glass wool fiber web having a gamma value of at least about 14, and a surface area of at least about 1.2 $m^2$/g. It further comprises chopped glass fibers combined with the glass wool fibers, wherein glass wool fibers are present in the media in the range of about 70% to 99% by weight and the chopped glass fibers are present in the filtration layer in the range of about 1% to 30% by weight of the total glass fibers.

There is a need for filter media that can be used in ASHRAE applications which have a desirable balance of properties including a high efficiency and a low resistance to fluid flow across the filter media.

Summary of Invention

Filter media which may be used in ASHRAE applications and methods of forming such media are described herein.

A filter media is provided according to claim 1.

Embodiments, advantages and features of the invention will become apparent from the following detailed description.

Detailed Description

The filter media described herein may be used in ASHRAE applications. The media includes a fiber web which has a combination of chopped strand glass fibers and microglass fibers. The fiber web can also include additional components such as synthetic fibers, binder components, as well as other additives. As described further below, the filter media has desirable properties including high gamma values with low fiber surface areas and a low resistance to fluid flow. The media may be incorporated into a variety of filter element products including panels and bags.

The fiber web (also referred to as a fiber mat) of the filter media typically includes a large percentage of glass fiber. The glass fibers comprise at least 90%, of the total weight of the filter media. In some embodiments, the fiber web includes between 92% and 95% by weight of the glass fibers.

The fiber web may be nonwoven. That is, the fiber web may be made using nonwoven processes such as wet laid processes, as described further below.

As noted above, the fiber web has a combination of chopped strand glass fibers and microglass fibers. Chopped strand glass fibers and microglass fibers are known to those skilled in the art. One skilled in the art is able to determine whether a glass fiber is chopped strand or microglass by observation (e.g., optical microscopy, electron microscopy). Chopped strand glass may also have chemical differences from microglass fibers. In some cases, though not required, chopped strand glass fibers may contain a greater content of calcium or sodium than microglass fibers. For example, chopped strand glass fibers may be close to alkali free with high calcium oxide and alumina content. Microglass fibers may contain 10-15% alkali (e.g., sodium, magnesium oxides) and have relatively lower melting and processing temperatures. The terms refer to the technique(s) used to manufacture the glass fibers. Such techniques impart the glass fibers with certain characteristics. In general, chopped strand glass fibers are drawn from bushing tips and cut into fibers in a process similar to textile production. Microglass fibers are drawn from bushing tips and further subjected to flame blowing or rotary spinning processes. In some cases, fine microglass fibers may be made using a remelting process. In this respect, microglass fibers may be fine or coarse. Chopped strand glass fibers are produced in a more controlled manner than microglass fibers, and as a result, chopped strand glass fibers will generally have less variation in fiber diameter and length than microglass fibers.

The microglass fibers can have small diameters such as less than 10.0 microns. For example, the diameter may be between 0.1 microns to about 9.0 microns; and, in some embodiments, between about 0.3 microns and about 6.5 microns. The microglass fibers may have an average fiber diameter of about 3.0 microns. The microglass fibers may have an average fiber diameter of about 3.9 microns. The microglass fibers may have an average fiber diameter of about 0.5 microns, about 0.6 microns, or about 0.65 microns. Average diameter distributions for microglass fibers are generally log-normal. However, it can be appreciated that microglass fibers may be provided in any other appropriate average diameter distribution (e.g., Gaussian distribution).

As noted above, microglass fibers may be fine or coarse. As used herein, fine microglass fibers are less than 1 micron in diameter and coarse microglass fibers are greater than or equal to 1 micron in diameter.

The microglass fibers may vary significantly in length as a result of process variations. The aspect ratios (length to diameter ratio) of the microglass fibers may be generally in the range of about 100 to 10,000. The aspect ratio of the microglass fibers may be in the range of about 200 to 2500; or, in the range of about 300 to 600. The average aspect ratio of the microglass fibers may be about 1,000; or about 300.

The chopped strand glass fibers generally have an average fiber diameter that is greater than the diameter of the microglass fibers. The chopped strand glass fiber may have a diameter of greater than about 5 microns. For example, the diameter range may be up to about 30 microns. The chopped strand glass fibers may have a fiber diameter between about 5 microns and about 12 microns. The chopped strand glass fibers may have an average fiber diameter of about 6.5 microns. Average diameter distributions for chopped strand glass fibers are generally log-normal. Chopped strand diameters tend to follow a normal distribution. Though, it can be appreciated that chopped strand glass fibers may be provided in any appropriate average diameter distribution (e.g., Gaussian distribution).

The chopped strand glass fibers may have a length in the range of between about 0.317 cm (0,125 inches) and about 2.54 cm (1 inch) (e.g., about 0.635 cm (0.25 inches) or about 1.27 cm (0.5 inches)).

The chopped strand glass fibers may have an organic surface finish. Such a surface finish can, for example, enhance dispersion of the fibers during processing. The surface finish may include starch, polyvinyl alcohol, or other suitable finishes. In some cases, the surface finish may be applied as a coating as the chopped strand glass fibers are extruded during production.

The ratio between the weight percentage of chopped strand glass fibers and microglass fibers provides for different characteristics in the filter media. In general, increasing the percentage of fine glass fibers will increase the overall surface area of the filter media; and, decreasing the percentage of coarse glass fibers will decrease the overall surface area of the filter media. Thus, in general, increasing the amount of chopped strand glass fibers as compared to the amount of microglass fibers decreases the overall surface area of the filter media; and, increasing the amount of microglass fibers as compared to the amount of chopped strand glass fibers increases the surface area of the filter media. Increasing the amount of chopped strand glass fibers within the filter media also increases the pleatability of the filter media (i.e., the ability of a filter to be pleated).

The percentage of chopped strand glass fibers and microglass fibers (e.g., coarse and/or fine) within the filter media are selected to provide desired characteristics.

Various percentages of chopped strand glass fibers are included within the glass fibers in the web. In some embodiments, chopped strand glass fibers make up less than about 55% by weight of the glass fiber in the web, less than about 40% by weight of the glass fibers, or less than about 20% by weight of the glass fibers. In some cases, chopped strand glass fibers make up between about 5% by weight and about 55% by weight of the glass fibers. For example, chopped strand glass fibers may make up between about 5% by weight and about 15% by weight of the glass fibers, between about 8% by weight and about 12% by weight of the glass fibers, or between about 25% by weight and 35% by weight of the glass fibers.

Additionally, different percentages of microglass fibers are included within the glass fibers within the web. In some embodiments, microglass fibers make up greater than about 45% by weight of the glass fibers, greater than about 60% by weight of the glass fiber web, or greater than about 80% by weight of the glass fibers. In some cases, microglass fibers make up between about 45% by weight and about 95% by weight of the glass fibers. For example, microglass fibers may make up between about 85% by weight and about 95% by weight of the glass fibers, between about 88% by weight and about 92% by weight of the glass fibers, or between about 65% by weight and 75% by weight of the glass fibers.

Coarse microglass fibers, fine microglass fibers, or a combination of microglass fibers thereof may be included within the glass fibers within the web. For coarse microglass fibers, coarse microglass fibers may make up between about 40% by weight and about 90% by weight of the glass fibers. In some cases, for example, coarse microglass fibers make up between about 75% by weight and about 90% by weight of the glass fibers, or between about 60% by weight and about 70% by weight of the glass fibers. For fine microglass fibers, in some embodiments, fine microglass fibers make up between about 0% and about 25% by weight of the glass fibers. In some cases, for example, fine microglass fibers make up between about 5% by weight and about 10% by weight of the glass fibers, or between about 2% by weight and about 12% by weight of the glass fibers.

Glass fibers having a fiber diameter greater than or equal to 5 microns may make up less than about 55% by weight of the glass fibers, less than about 40% by weight of the glass fibers, or less than about 20% by weight of the glass fibers. In some cases, glass fibers having a fiber diameter greater than or equal to 5 microns make up between about 5% by weight and about 55% by weight of the glass fibers. For example, glass fibers having a fiber diameter greater than or equal to 5 microns may make up between about 5% by weight and about 15% by weight of the glass fibers, between about 8% by weight and about 12% by weight of the glass fibers, or between about 25% by weight and 35% by weight of the glass fibers.

Glass fibers having a fiber diameter less than 5 microns may make up greater than about 45% by weight of the glass fibers, greater than about 60% by weight of the glass fibers, or greater than about 80% by weight of the glass fibers. In some cases, glass fibers having a fiber diameter less than 5 microns make up between about 45% by weight and about 95% by weight of the glass fibers. For example, glass fibers having a fiber diameter less than 5 microns may make up between about 85% by weight and about 95% by weight of the glass fibers, between about 88% by weight and about 92% by weight of the glass fibers, or between about 65% by weight and 75% by weight of the glass fibers.

In addition to glass fibers, the filter media may also include other components including synthetic fibers. The synthetic fibers typically comprise a small weight percentage of the filter media. For example, the synthetic fibers may comprise less than about 25%, less than about 15%, or less than about 5% (e.g., 2%, 3%) of the total weight of the filter media. It should be understood that it may also be possible for synthetic fibers to be incorporated within the filter media outside of the ranges disclosed. The synthetic fibers may enhance adhesion of the glass fibers within the web during processing. Synthetic fibers may be, for example, binder fibers and/or staple fibers.

In general, the synthetic fibers may have any suitable composition. In some cases, the synthetic fibers comprise a thermoplastic. Non-limiting examples of the synthetic fibers include PVA (polyvinyl alcohol), polyester, polyethylene, polypropylene, and acrylic. It should be appreciated that other appropriate synthetic fibers may also be used.

The filter media may also include a binder. The binder typically comprises a small weight percentage of the filter media. For example, the binder may comprise less than about 10%, or less than about 5% (e.g., between 2% and 5%) of the total weight of the filter media. In some embodiments, the binder may be about 4% by weight of the filter media. As described further below, the binder may be added to the fibers in the wet fiber web state. In some embodiments, the binder coats the fibers and is used to adhere fibers to each other to facilitate adhesion between the fibers.

In general, the binder may have any suitable composition. The binder may be resin-based. The binder may be in the form of one or more components. In some embodiments, the binder includes a soft binder and a hard binder. Though, it should be understood that not all embodiments include all of these components (e.g., hard binder) and that other appropriate additives may be incorporated in the binder.

Soft binders are known to those of skill in the art and generally refer to a binder having a relatively low glass transition temperature. A soft binder may have a glass transition temperature less than about 15 °C. A soft binder may have a glass transition temperature within a range of between about 0 °C and about 2 °C. One suitable soft binder is acrylic, though it should be understood that other compositions may also be suitable, such as for example, polyester, polyolefin, and polyurethane. When present, the soft binder may be one of the larger components of the binder. For example, the soft binder may comprise greater than about 40%, or greater than about 50%, of the total weight of the binder. The soft binder may comprise between about 50% and about 80% by weight, or between about 50% and about 55% by weight of the binder. In some cases, the soft binder may make up the entire binder. In other embodiments, no soft binder is present.

Hard binders are known to those of skill in the art and generally refer to a binder having a relatively high glass transition temperature. When used together in a binder resin, a hard binder will have a greater glass transition temperature than a soft binder. In some cases, a hard binder will have a glass transition temperature within a range of between about 25 °C and about 35 °C. A hard binder may have a glass transition temperature of about 30 °C. For example, the hard binder may be a polyvinyl acetate, polyvinyl alcohol, polyacrylic acid, acrylic, styrene, styrene acrylic, and/or combinations thereof. Other compositions may also be suitable.

When present, the percentage of hard binder within the web may be lower than the percentage of soft binder within the web. However, in other cases, the percentage of hard binder may be higher than, or approximately equal to, the percentage of soft binder. For example, the hard binder may comprise less than 40%, or less than 30%, of the total weight of the binder. For example, the hard binder may comprise between about 25% and about 35% by total weight of the binder. The percentage of hard binder in the binder resin may be between about 8% by weight and about 10% by weight. Alternatively, no hard binder is present.

As noted above, the filter media may include a fluorocarbon polymer. The fluorocarbon polymer (also referred to as a perfluorocarbon) may be an eight carbon fluorocarbon. The fluorocarbon polymer used may be a fluoroacrylate copolymer emulsion that includes a dipropylone glycol monomethyl ether. An example of a suitable fluorocarbon is the Asahi Guard AG 955 (product code #930078) from LJ Specialties Limited (Enterprise Drive, Holmewood Industrial Park, Holmewood, Chesterfield, Derbyshire, S42 5UW United Kingdom). Another example of a suitable fluorocarbon is a Repearl F-35 Fluorochemical from MIC Specialty Chemicals, Inc. (134 Mill Street, Tiverton, RI 02878). A further example of a suitable fluorocarbon is a Phobol 8195 from Huntsman International, Textile Effects (4050 Premier Drive, High Point, NC 27265). It can be appreciated that any other suitable fluorocarbon polymer, and/or combinations thereof may be used as appropriately in that presented herein.

The fluorocarbon may comprise less than about 1.5%, or less than about 1.0%, of the dry weight of the filter media. In some cases, the fluorocarbon may range between about 0.2% and about 0.75% of the dry weight of the filter media. The filter media may comprise a polysiloxane. The polysiloxane may aid in imparting the filter media with desirable properties (e.g., high gamma properties) when used in combination with the fluorocarbon. The polysiloxane may be a polyfunctional aminosiloxane, though other suitable siloxane compositions may also be possible. An example of a suitable polysiloxane is Synthebond SF-30 from Hexion Specialty Chemicals (200 Railroad St. Roebuck, SC 29376). Another example of a suitable polysiloxane is Ultratex FMW Silicone Softener from Huntsman International, Textile Effects.

The polysiloxane may comprise less than about 1.5%, less than about 1.2%, or less than about 1.0% of the dry weight of the filter media. The polysiloxane may be greater than about 0.1% of the dry weight of the filter media. For example, the polysiloxane may comprise between about 0.1% by weight and about 1.0% of the dry weight of the filter media, or between about 0.1% by weight and about 0.5% of the dry weight of the filter media.

In addition to the binder, additional components, thermoplastic, and glass components described above, the fiber webs may include a variety of other suitable additives (typically, in small weight percentages) such as, surfactants, coupling agents, crosslinking agents, amongst others.

The fiber web may have a variety of desirable properties and characteristics which make the filter media particularly well-suited for ASHRAE applications.

According to the invention, the surface area of the filter media is less than 1.2 $m^2$/g. In some embodiments, the surface area may be less than 1.1 $m^2$/g, less than 1.0 $m^2$/g, less than 0.8 $m^2$/g, less than 0.6 $m^2$/g, less than 0.5 $m^2$/g, less than 0.4 $m^2$/g, or less than 0.2 $m^2$/g. In one embodiment, the surface area may be 0.1 $m^2$/g or greater. It should be understood that the surface area may be between any of the above noted upper and lower limits. For example, the surface area may be between 0.1 $m^2$/g and 0.5 $m^2$/g, between 0.2 $m^2$/g and 0.8 $m^2$/g, or between 0.5 $m^2$/g and 1.2 $m^2$/g. As determined herein, surface area is measured through use of a standard BET surface area measurement technique. The BET surface area is measured according to section 10 of Battery Council International Standard BCIS-03A, "Recommended Battery Materials Specifications Valve Regulated Recombinant Batteries", section 10 being "Standard Test Method for Surface Area of Recombinant Battery Separator Mat". Following this technique, the BET surface area is measured via adsorption analysis using a BET surface analyzer (e.g., Micromeritics Gemini II 2370 Surface Area Analyzer) with nitrogen gas; the sample amount is between 0.5 and 0.6 grams in a 1.9 cm (3/4") tube; and, the sample is allowed to degas at 75 °C for a minimum of 3 hours.

In general, such surface areas contribute to characteristics that enable the filter media to be used in ASHRAE applications. Such surface areas may be lower than surface areas needed for HEPA filter media which demand higher efficiencies. However, the low surface areas enable low pressure drops (and resistance to air flow) across the filter as described further below.

According to the invention, the permeability of the filter media may range from between about 2.54 $cm^3$/$cm^2$/min (5 cubic feet per minute per square foot (cfm/sf)) and about 160 $cm^3$/ $cm^2$/min (250 cfm/sf) between about 3.55 $cm^3$/$cm^2$/min (7cfm/ sf) and about 101.6 $cm^3$/$cm^2$/min (200 cfm/sf), or between about 7.62 $cm^3$/$cm^2$/min (15 cfm/sf) and 68.52 $cm^3$/$cm^2$/min (135 cfm/sf). As determined herein, the permeability of the filter media is measured according to the Technical Association of the Pulp and Paper Industry (TAPPI) Method T251. The permeability of a filter media is an inverse function of flow resistance and can be measured with a Frazier Permeability Tester. The Frazier Permeability Tester measures the volume of air per unit of time that passes through a unit area of sample at a fixed differential pressure across the sample. Permeability can be expressed in cubic feet per minute per square (= 0.508 $cm^3$/$cm^2$sec) foot at 125 Pa (0.5 inch water) differential.

According to the invention, the basis weight of the filter media ranges from between about 10 grams per square meter (gsm) and about 1000 gsm, between about 25 gsm and about 150 gsm, or between about 55 gsm and about 85 gsm. As determined herein, the basis weight of the filter media is measured according to TAPPI Standard T410. The values are expressed in grams per square meter. Basis weight can generally be measured on a laboratory balance that is accurate to 0.1 grams. A preferred size is 0.0613 $m^2$ (95 $in^2$) of area.

According to the invention, the caliper of the filter media measured at 50.3 kPa (7.3 psi) ranges from between about 0.10 mm and about 50.0 mm, between about 0.10 mm and about 10.0 mm, between about 0.20 mm and about 0.90 mm, or between about 0.25 mm and about 0.50 mm. As determined herein, the caliper of the filter media is measured according to TAPPI Standard T411. Following this technique, a motorized caliper gauge TMI gage 49-70 can be used which has a pressure foot of 0.63 inch (16.0 mm) diameter and exerts a load of 7.3 psi (50 kPa).

The filter media may be further characterized by other properties. Penetration, often expressed as a percentage, is defined as follows:

$$Pen = C/C_0$$

where C is the particle concentration after passage through the filter and $C_0$ is the particle concentration before passage through the filter. Typical tests of penetration involve blowing dioctyl phthalate (DOP) particles through a filter media and measuring the percentage of particles that penetrate through the filter media. As used herein, the DOP penetration test involves exposing the filter media to DOP aerosol particles approximately 0.3 microns in diameter at a face velocity through the filter media of approximately 5.3 cm/sec. Filter efficiency is defined as:
100-% Penetration

Because it may be desirable to rate filter media based on the relationship between penetration and pressure drop across the filter, filters may be rated according to a value termed gamma value. Steeper slopes, or higher gamma values, are indicative of better filter performance. Gamma value is expressed according to the following formula:

$$gamma = (-\log(DOP\ penetration\ \%/100)/pressure\ drop,\ mm\ H_2O)\ X\ 100$$

The pressure drop, also referred to as flow resistance, across the filter media is measured based on the above DOP penetration test. The pressure drop across the filter media is generally less than 245 Pa (25.0 mm of $H_2O$). In some embodiments, for example, the pressure drop of the filter media may range from between about 4.9 Pa (0.5.mm of $H_2O$). and 196 Pa (20.0 mm of $H_2O$), or between about 9.8 Pa (1.0 mm of $H_2O$) and 98 Pa (10.0 mm of $H_2O$). The pressure drop is measured as the differential pressure across the filter media during air flow through at a velocity of 5.3 centimeters per second (corrected for standard conditions of temperature and pressure). Values are typically recorded as millimeters of water or Pascals.

As discussed above, the DOP penetration percentage is based on the percentage of particles that penetrate through the filter media. With decreased DOP penetration percentage (i.e., increased efficiency) where particles are less able to penetrate through the filter media, gamma increases. With decreased pressure drop (i.e., low resistance to fluid flow across the filter), gamma increases (this assumes the other property remains constant).

The filter media have very high gamma values for ASHRAE applications, particularly when considered in combination with the above-noted surface areas. According to the invention, the gamma values for the filter media are greater than 11.5, or greater than 12. In some cases, the gamma values are greater than 12.5, or greater than 13. For example, the gamma values may be between 11.5 and 14, 11.5 and 13, between 12.0 and 14.0, or between 11.5 and 14.0. In some embodiments, the gamma values may be greater than 14.0. As determined herein, gamma is calculated based on measurements taken of a filter media subject to a 5.3 cm/sec. face velocity, as described in connection with the DOP penetration test above and below.

In general, the DOP penetration percentages disclosed herein are higher than DOP penetration percentages that may be found in certain HEPA filter media. In some embodiments, for ASHRAE filter media, the DOP penetration percentage may be greater than 75.0%, greater than 50.0%, greater than 25.0%, greater than 15.0%, greater than 10.0%, greater than 1.0%, greater than 0.1%, or greater than 0.03%. The DOP penetration percentage is generally related to how fine the glass fibers are in the filter media. Finer fibers (higher surface area) will give rise to a decreased DOP penetration percentage while coarser fibers (lower surface area) will give rise to an increased DOP penetration percentage. The DOP penetration percentage is measured according to ASTM Standard D2986. The Q127 penetrometer having a sample holder of 100 square centimeters is used for measuring filtration efficiency. Homogeneous DOP smoke particles 0.3 micrometers in diameter are passed through the test sample at 5.3 cm/sec. The percentage of DOP particles passing through the sample is measured by a light scattering technique and recorded as percent DOP penetration.

The filter media may be produced using processes based on known techniques. As noted above, the filter media can be produced using nonwoven techniques. In some cases, the filter media are produced using a wet laid processing technique. In general, when the filter media comprises a glass fiber web, the glass fibers (e.g., chopped strand and microglass) may be mixed together with the synthetic fibers to provide a glass fiber slurry. For example, the slurry may be an aqueous-based slurry. The chopped strand glass fibers, microglass fibers, and synthetic fibers may be stored separately in various holding tanks prior to being mixed together. These fibers may be processed through a pulper before being mixed together. Combinations of chopped strand glass fibers, microglass fibers, and synthetic fibers may be processed through a pulper and/or a holding tank prior to being mixed together. As discussed above, microglass fibers may include fine microglass fibers and coarse microglass fibers.

It should be appreciated that any suitable method for creating a glass fiber slurry may be used. In some cases, additional additives are added to the slurry to facilitate processing. The temperature may also be adjusted to a suitable range, for example, between 0.55 °C (33 °F) and 37.7 °C (100 °F) (e.g., between 10 °C (50 °F) and 23.44 °C (85 °F). In some cases, the temperature of the slurry is maintained. In some cases, the temperature is not actively adjusted.

In some cases, the wet laid process uses similar equipment as a conventional papermaking process, which includes a hydropulper, a former or a headbox, a dryer, and an optional converter. For example, the slurry may be prepared in one or more pulpers. After appropriately mixing the slurry in a pulper, the slurry may be pumped into a headbox, where the slurry may or may not be combined with other slurries or additives may or may not be added. The slurry may also be diluted with additional water such that the final concentration of fiber is in a suitable range, such as for example, between about 0.1% to 0.5% by weight.

In some cases, pH of the glass fiber slurry may be adjusted as desired. In some embodiments, the pH of the glass fiber slurry may range between about 2 and about 4, or between about 2.5 and about 3.5. In other cases, the pH of the glass fiber slurry is generally about 2.7 or about 2.8. In some cases, acidity in the glass fiber slurry may provide for increased van der Waals interaction between glass fibers within the slurry. Due to the glass fibers having a lower surface area than for example, HEPA glass fiber media, the van der Waals interaction between glass fibers tends to be weaker as compared to glass fibers having a higher surface area. Therefore, a lower pH of the glass fiber slurry may be provided to increase van der Waals interaction between glass fibers as compared to that of the glass fiber slurry at a more neutral pH.

Fibers may then be collected on a screen or wire at an appropriate rate. Before the slurry is sent to a headbox, the slurry may be passed through centrifugal cleaners for removing unfiberized glass or shot. The slurry may or may not be passed through additional equipment such as refiners or deflakers to further enhance the dispersion of the fibers.

In some cases, the process then involves introducing binder into the preformed glass fiber web. In some cases, as the glass fiber web is passed along an appropriate screen or wire, different components included in the binder (e.g., soft binder, optional hard binder), which may be in the form of separate emulsions, are added to the glass fiber web using a suitable technique. The fluorocarbon may also be appropriately added to the glass fiber web along with the binder or independently from the binder. In some cases, each component of the binder resin is mixed as an emulsion prior to being combined with the other components and/or glass fiber web. The fluorocarbon may also be provided as an emulsion prior to mixing with the binder and incorporation into the glass fiber web. The components included in the binder along with the fluorocarbon may be pulled through the glass fiber web using, for example, gravity and/or vacuum. One or more of the components included in the binder resin and/or the fluorocarbon may be diluted with softened water and pumped into the glass fiber web.

The polysiloxane may be added after the binder and fluorocarbon components have been added. For example, the polysiloxane may be introduced into the glass fiber web in a downstream step after the binder and fluorocarbon components have already been introduced into the web. In another example, the polysiloxane may be introduced into the glass fiber web along with the binder and fluorocarbon components, where the polysiloxane is added last in the process just before the addition point to the fiber web.

After the binder, the fluorocarbon, and the polysiloxane are incorporated into the glass fiber web, the wet-laid fiber web may be appropriately dried. The wet-laid fiber web may be drained. The wet-laid fiber web may be passed over a series of drum dryers to dry at an appropriate temperature (e.g., about 135 °C (275 °F) and 162.7 °C (325 °F), or any other temperature suitable for drying). For some cases, typical drying times may vary until the moisture content of the composite fiber is as desired. In some embodiments, drying of the wet-laid fiber web may be performed using infrared heaters. In some cases, drying will aid in curing the fiber web. In addition, the dried fiber web may be appropriately reeled up for downstream filter media processing.

Different layers of glass fiber webs may be combined to produce filter media based on desired properties. For example, in some embodiments, a relatively coarser pre-filter fiber glass web may be built alongside of a relatively finer fiber glass web to form a multi-phase (e.g., dual phase) filter media. Multi-phase fiber media may be formed in an appropriate manner. As an example, a filter media may be prepared by a wet laid process where a first dispersion (e.g., a pulp) containing a glass fiber slurry (e.g., glass fibers in an aqueous solvent such as water) is applied onto a wire conveyor in a papermaking machine (e.g., fourdrinier or rotoformer), forming a first phase. A second dispersion (e.g., another pulp) containing another glass fiber slurry (e.g., glass fibers in an aqueous solvent such as water) is then applied onto the first phase. Vacuum is continuously applied to the first and second dispersions of fibers during the above process to remove solvent from the fibers, resulting in a filter media having a first phase and a second phase. The filter media formed is then dried. It can be appreciated that filter media may be suitably tailored not only based on the components of each glass fiber web, but also according to the effect of using multiple glass fiber webs of varying characteristics in appropriate combination.

After formation, the filter media may be further processed according to a variety of known techniques. For example, the filter media may be pleated and used in a pleated filter element. Filter media, or various layers thereof, may be suitably pleated by forming score lines at appropriately spaced distances apart from one another, allowing the filter media to be folded. It should be appreciated that any suitable pleating technique may be used.

It should be appreciated that the filter media may include other parts in addition to the glass fiber web. In some embodiments, the filter media may include more than one glass fiber web. Further processing may include incorporation of one or more structural features and/or stiffening elements. The glass fiber web(s) may be combined with additional structural features such as polymeric and/or metallic meshes. For example, a screen backing may be disposed on the filter media, providing for further stiffness. In some cases, a screen backing may aid in retaining the pleated configuration. For example, a screen backing may be an expanded metal wire or an extruded plastic mesh.

The filter media may be incorporated into a variety of suitable filter elements for use in various applications including ASHRAE filter media applications. The filter media may generally be used for any air filtration application. For example, the filter media may be used in heating and air conditioning ducts. The filter media may also be used in combination with other filters as a pre-filter, such as for example, acting as a pre-filter for high efficiency filter applications (e.g., HEPA). Filter elements may have any suitable configuration as known in the art including bag filters and panel filters.

In some cases, the filter element includes a housing that may be disposed around the filter media. The housing can have various configurations, with the configurations varying based on the intended application. In some embodiments, the housing may be formed of a frame that is disposed around the perimeter of the filter media. For example, the frame may be thermally sealed around the perimeter. In some cases, the frame has a generally rectangular configuration surrounding all four sides of a generally rectangular filter media. The frame may be formed from various materials, including for example, cardboard, metal, polymers, or any combination of suitable materials. The filter elements may also include a variety of other features known in the art, such as stabilizing features for stabilizing the filter media relative to the frame, spacers, or any other appropriate feature.

As noted above, in some embodiments, the filter media can be incorporated into a bag (or pocket) filter element. A bag filter element may be formed by placing two filter media together (or folding a single filter media in half), and mating three sides (or two if folded) to one another such that only one side remains open, thereby forming a pocket inside the filter. Multiple filter pockets may be attached to a frame to form a filter element. Each pocket may be positioned such that the open end is located in the frame, thus allowing for air flow into each pocket. A frame includes rectangular rings that extend into and retain each pocket. It should be appreciated that a frame can have virtually any configuration, and various mating techniques known in the art may be used to couple the pockets to the frame. Moreover, the frame may include any number of pockets, such as for example, between 6 and 10 pockets, which is common for bag filters.

A bag filter may include any number of spacers disposed therein and configured to retain opposed sidewalls of the filter at a spaced distance apart from one another. Spacers can be threads or any other element extending between sidewalls. It can be understood that various features known in the art for use with bag or pocket filters can be incorporated into the filter media disclosed herein.

It should be understood that the filter media and filter elements may have a variety of different constructions and the particular construction depends on the application in which the filter media and elements are used. In some cases, a substrate may be added to the filter media.

The filter elements may have the same property values as those noted above in connection with the filter media. For example, the above-noted gamma values may also be found in filter elements.

During use, the filter media mechanically trap contaminant particles on the fiber web as fluid (e.g., air) flows through the filter media. The filter media need not be electrically charged to enhance trapping of contamination. The filter media may or may not be electrically charged. The filter media may or may not include water repellant properties.

EXAMPLES

The following non-limiting examples describe filter media suitable for ASHRAE applications that have been made according to aspects discussed herein.

Example 1

Chopped strand glass fibers (8% by weight of the fiber web), microglass fibers (89% by weight of the fiber web), and polyvinyl alcohol fibers (3% by weight of the fiber web) were fed into separate pulpers with water and transferred to respective holding tanks. The chopped strand glass fibers, microglass fibers, and polyvinyl alcohol fibers were subsequently blended together to form a glass fiber slurry. Separate emulsions of acrylic (soft binder), polyacrylic acid (hard binder), and fluoroacrylate copolymer diluted with softened water were formed and kept in holding tanks. The glass fiber slurry was placed on a carrier wire and subsequently subject to gravity and a vacuum for draining the water from the slurry to form a glass fiber web. The glass fiber web was then moved toward a region for pumping the acrylic, polyacrylic acid, and fluoroacrylate copolymer emulsions through the glass fiber web. Each of the acrylic, polyacrylic acid, and fluoroacrylate copolymer emulsions were filtered and pumped toward the glass fiber web in the same feed line. The polysiloxane diluted with softened water was then added in the same feed line as the soft binder, the hard binder, and the fluoroacrylate copolymer, but further down the line after the other components. The binder, fluoroacrylate copolymer, and polysiloxane were subsequently pulled through the glass fiber web using gravity and a vacuum so as to form a relatively even distribution of the binder resin and other components throughout the glass fiber web. The glass fiber web was then dried with dryer cylinders and infrared heaters and reeled up for further testing and processing.

In this example, the DOP penetration percentage was held at 16.2% based on usage of relatively fine glass fibers as compared with the other examples. A pressure drop of 67 Pa was measured across the filter media. The gamma value was measured to be 11.5. The basis weight was measured to be 67 g/m$^2$. The thickness of the filter media was measured to be 0.52 mm. The caliper thickness of the filter media at 50.33 kPa (7.3 psi) was measured to be 0.39. The BET surface area was measured to be 0.70 m$^2$/g.

Example 2

The filter media was produced in the same manner as Example 1, except the percent DOP penetration was held at 34.0% based on usage of a higher percentage of coarse glass fibers as compared with Example 1. A pressure drop of 38 Pa was measured across the filter media. The gamma value was measured to be 12.1. The basis weight was measured to be 68 g/m$^2$. The thickness of the filter media was measured to be 0.57 mm. The caliper thickness of the filter media at 50.33 kPa (7.3 psi) was measured to be 0.42.

Example 3

The filter media was produced in the same manner as Examples 1 and 2, except the percent DOP penetration was held at 50.8% based on usage of a higher percentage of coarse glass fibers as compared with Examples 1 and 2. A pressure drop of 23 Pa was measured across the filter media. The gamma value was measured to be 12.4. The basis weight was measured to be 67 g/m$^2$. The thickness of the filter media was measured to be 0.60 mm. The caliper thickness of the filter media at 50.33 kPa (7.3 psi) was measured to be 0.45.

Example 4

The filter media was produced in the same manner as Examples 1, 2 and 3, except the percent DOP Penetration was held at 75.6% based on usage of a higher percentage of coarse glass fibers as compared with Examples 1, 2 and 3. A pressure drop of 11 Pa was measured across the filter media. The gamma value was measured to be 10.8 The basis weight was measured to be 67 g/m$^2$. The thickness of the filter media was measured to be 0.60 mm. The caliper thickness of the filter media at 50.33 kPa (7.3 psi) was measured to be 0.43. BET surface area was measured to be 0.31 m$^2$/g.

Example 5

The filter media was produced in a manner similar to the previous examples, except the chopped strand, coarse microfiber glass, and PVOH fibers were pulped together. The fine microfiber was pulped separately and sent to a different holding chest. In addition, the water used for the saturant mix was not softened. The fiber blend used was 28% chopped strand, 3% polyvinyl alcohol fibers and 69% microfibers by weight of the glass fiber web. Properties were similar to example 2 in that the percent DOP Penetration was held at 34.8% and a pressure drop of 34 Pa was measured across the filter media. The gamma value was calculated to be 13.1. The basis weight was measured to be 77 g/m$^2$. The caliper thickness of the filter media was measured to be 0.39 mm at 50.33 kPa (7.3 psi). The BET surface area was measured to be 0.59 m$^2$/g.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the scope of the claims.

**Claims**

1. A filter media comprising:

a fiber web comprising a glass fiber web, wherein the glass fiber web comprises glass fibers and the weight percentage of glass fibers is at least 90% of the total weight of the fiber web, wherein the glass fiber web comprises chopped strand glass fibers and microglass fibers,
wherein the filter media has a gamma value of at least 11.5, a BET surface area of less than 1.2 m$^2$/g, a pressure drop of less than 245 Pa (25.0 mm H$_2$O), a permeability between 2.54 cm$^3$/cm$^2$/min (5 cfm/sf) and 160

cm$^3$/cm$^2$/min (250 cfm/sf), a basis weight between 10 gsm and 1000 gsm, and a caliper between 0.10 mm and 50.0 mm.

2. The filter media of claim 1, wherein the BET surface area of the filter media is between 0.5 m$^2$/g and 1.2 m$^2$/g, between 0.1 m$^2$/g and 1.2 m$^2$/g, less than 1.0 m$^2$/g, or less than 0.6 m$^2$/g.

3. The filter media of claim 1, wherein the chopped strand glass fibers comprise less than 55% by weight of the glass fibers.

4. The filter media of claim 1, wherein the microglass fibers comprise greater than 45% by weight of the glass fibers.

5. The filter media of claim 1, wherein the microglass fibers comprise fine microglass fibers and coarse microglass fibers.

6. The filter media of claim 5, wherein the fine microglass fibers comprise less than 25% by weight of the glass fibers.

7. The filter media of claim 5, wherein the coarse microglass fibers comprise between 40% by weight and 90% by weight of the glass fibers.

8. The filter media of claim 1, wherein the fiber web comprises synthetic fibers and the synthetic fibers are less than 5% by weight of the fiber web.

9. The filter media of claim 1, wherein the fiber web includes a binder, optionally a soft binder and a hard binder.

10. The filter media of claim 1, wherein the filter media has a gamma value of at least 12.0, at least 12.5, or between 11.5 and 14.

11. The filter media of claim 1, wherein:

a) the DOP penetration percentage of the filter media is greater than 15%; or
b) the permeability of the filter media is between 7.62 cm$^3$/cm$^2$/min (15 cfm/sf) and 68.58 cm$^3$/cm$^2$/min (135 cfm/sf), or
c) the pressure drop of the filter media is between 1.96 Pa (0.2 mm H$_2$O) and 196 Pa (20 mm H$_2$O), or
d) the basis weight of the filter media is between 55 gsm and 85 gsm.

12. A filter element comprising the filter media of claim 1, optionally wherein the filter element is a bag filter element or a panel filter element.

**Patentansprüche**

1. Filtermedium, umfassend:

eine Faserbahn, die eine Glasfaserbahn umfasst, wobei die Glasfaserbahn Glasfasern umfasst und der Gewichtsprozentsatz an Glasfasern mindestens 90% des Gesamtgewichts der Faserbahn ist, wobei die Glasfaserbahn geschnittene Kurzglasfasern und Mikroglasfasern umfasst, wobei das Filtermedium einen Gammawert von mindestens 11,5 einen BET-Oberflächenbereich von weniger als 1,2 m$^2$/g, einen Druckabfall von weniger als 245 Pa (25,0 mm H$_2$O), eine Permeabilität zwischen 2,54 cm$^3$/cm$^2$/min (5 cfm/sf) und 160 cm$^3$/cm$^2$/min (250 cfm/sf), ein Basisgewicht zwischen 10 gsm und 1000 gsm und eine Stärke zwischen 0,10 mm und 50,0 mm aufweist.

2. Filtermedium nach Anspruch 1, wobei der BET-Oberflächenbereich des Filtermediums zwischen 0,5 m$^2$/g und 1,2 m$^2$/g, zwischen 0,1 m$^2$/g und 1,2 m$^2$/g, kleiner als 1,0 m$^2$/g oder kleiner als 0,6 m$^2$/g ist.

3. Filtermedium nach Anspruch 1, wobei die geschnittenen Kurzglasfasern weniger als 55 Gewichtsprozent der Glasfasern umfassen.

4. Filtermedium nach Anspruch 1, wobei die Mikroglasfasern mehr als 45 Gewichtsprozent der Glasfasern umfassen.

**5.** Filtermedium nach Anspruch 1, wobei die Mikroglasfasern feine Mikroglasfasern und grobe Mikroglasfasern umfassen.

**6.** Filtermedium nach Anspruch 5, wobei die feinen Mikroglasfasern weniger als 25 Gewichtsprozent der Glasfasern umfassen.

**7.** Filtermedium nach Anspruch 5, wobei die groben Mikroglasfasern zwischen 40 Gewichtsprozent und 90 Gewichtsprozent der Glasfasern umfassen.

**8.** Filtermedium nach Anspruch 1, wobei die Faserbahn synthetische Fasern umfasst und die synthetischen Fasern weniger als 5 Gewichtsprozent der Faserbahn sind.

**9.** Filtermedium nach Anspruch 1, wobei die Faserbahn ein Bindemittel beinhaltet, optional ein weiches Bindemittel und ein hartes Bindemittel.

**10.** Filtermedium nach Anspruch 1, wobei das Filtermedium einen Gammawert von mindestens 12,0, mindestens 12,5 oder zwischen 11,5 und 14 aufweist.

**11.** Filtermedium nach Anspruch 1, wobei:

a) der DOP-Durchdringungsprozentsatz des Filtermediums größer als 15% ist; oder
b) die Permeabilität des Filtermediums zwischen 7,62 cm$^3$/cm$^2$/min (15 cfm/sf) und 68,58 cm$^3$/cm$^2$/min (135 cfm/sf) ist, oder
c) der Druckabfall des Filtermediums zwischen 1,96 Pa (0,2 mm H$_2$O) und 196 Pa (20 mm H$_2$O) ist,
d) das Basisgewicht des Filtermediums zwischen 55 gsm und 85 gsm ist.

**12.** Filterelement, das das Filtermedium nach Anspruch 1 umfasst, optional, wobei das Filterelement ein Beutelfilterelement oder ein Filterplattenelement ist.


**Revendications**

**1.** Milieux filtrants comprenant :

une bande de fibres comprenant une bande de fibres de verre, dans lesquels la bande de fibres de verre comprend des fibres de verre et le pourcentage pondéral des fibres de verre est d'au moins 90 % du poids total de la bande de fibres, dans lesquels la bande de fibres de verre comprend des fibres de verre à fil coupé et des microfibres de verre,
dans lesquels les milieux filtrants présentent une valeur gamma d'au moins 11,5, une surface BET de moins de 1,2 m$^2$/g, une chute de pression de moins de 245 Pa (25,0 mm H$_2$O), une perméabilité entre 2,54 cm$^3$/cm$^2$/min (5 pi$^3$/min/pi$^2$) et 160 cm$^3$/cm$^2$/min (250 pi$^3$/min/pi$^2$), un poids de base entre 10 g/m$^2$ et 1 000 g/m$^2$, et une épaisseur entre 0,10 mm et 50,0 mm.

**2.** Milieux filtrants selon la revendication 1, dans lesquels la surface BET des milieux filtrants est entre 0,5 m$^2$/g et 1,2 m$^2$/g, entre 0,1 m$^2$/g et 1,2 m$^2$/g, moins de 1,0 m$^2$/g, ou moins de 0,6 m$^2$/g.

**3.** Milieux filtrants selon la revendication 1, dans lesquels les fibres de verre à fil coupé comprennent moins de 55 % en poids des fibres de verre.

**4.** Milieux filtrants selon la revendication 1, dans lesquels les microfibres de verre comprennent plus de 45 % en poids des fibres de verre.

**5.** Milieux filtrants selon la revendication 1, dans lesquels les microfibres de verre comprennent des microfibres de verre fines et des microfibres de verre grossières.

**6.** Milieux filtrants selon la revendication 5, dans lesquels les microfibres de verre fines comprennent moins de 25 % en poids des fibres de verre.

**7.** Milieux filtrants selon la revendication 5, dans lesquels les microfibres de verre grossières comprennent entre 40 % en poids et 90 % en poids des fibres de verre.

**8.** Milieux filtrants selon la revendication 1, dans lesquels la bande de fibres comprend des fibres synthétiques et les fibres synthétiques sont moins de 5 % en poids de la bande de fibres.

**9.** Milieux filtrants selon la revendication 1, dans lesquels la bande de fibres inclut un liant, facultativement un liant doux et un liant dur.

**10.** Milieux filtrants selon la revendication 1, dans lesquels les milieux filtrants présentent une valeur gamma d'au moins 12,0, au moins 12,5, ou entre 11,5 et 14.

**11.** Milieux filtrants selon la revendication 1, dans lesquels :

a) le pourcentage de pénétration DOP des milieux filtrants est supérieur à 15 % ; ou
b) la perméabilité des milieux filtrants est entre 7,62 $cm^3/cm^2/min$ (15 $pi^3/min/pi^2$) et 68,58 $cm^3/cm^2/min$ (135 $pi^3/min/pi^2$), ou
c) la chute de pression des milieux filtrants est entre 1,96 Pa (0,2 mm $H_2O$) et 196 Pa (20 mm $H_2O$), ou
d) le poids de base des milieux filtrants est entre 55 $g/m^2$ et 85 $g/m^2$.

**12.** Élément filtrant comprenant les milieux filtrants selon la revendication 1, facultativement dans lequel l'élément filtrant est un élément de filtre à manches ou un élément de filtre panneau.

**EP 2 401 146 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004224594 A1